# EUROPÄISCHE PATENTANMELDUNG

(11) **EP 2 060 837 A2**
(43) Veröffentlichungstag der Anmeldung: **20.05.2009**
(21) Anmeldenummer: 08019670.2
(22) Anmeldetag: 11.11.2008
(51) Int. Cl.: F16K 31/122

(54) **Stromregelventil**

(30) Priorität: 16.11.2007 DE 102007054781
(71) Anmelder: Howaldtswerke-Deutsche Werft GmbH, 24143 Kiel (DE)
(72) Erfinder: Körner, Roland, Dr.-Ing., 24248 Mönkeberg (DE)
(74) Vertreter: Vollmann, Heiko

(57) **Zusammenfassung**

Ein Stromregelventil ist zum Fluten eines gegenüber seiner Umgebung unter Unterdruck stehenden Raumes und insbesondere zum Fluten eines Behälters an einen Unterseeboot vorgesehen. Das Stromregelventil ist mit einer Absperreinrichtung ausgestattet und weist Mittel zum Steuern der Absperreinrichtung auf.

## Beschreibung

Die Erfindung betrifft ein Stromregelventil mit den in Anspruch 1 angegebenen Merkmalen.

Bei militärischen Unterseebooten ist es oftmals erforderlich, Bootsräume bzw. druckfeste Behältnisse des Unterseeboots während der Tauchfahrt mit Umgebungswasser zu fluten. Zu diesen zu flutenden Räumen zählen beispielsweise Waffenausstoßrohre. In diesen Ausstoßrohren sind die Waffen, z.B. Torpedos, bei verschlossener Ausstoßöffnung des Rohres trocken gelagert. Zum Öffnen der Ausstoßöffnung muss zunächst ein Druckausgleich zwischen dem Inneren des Ausstoßrohres und der Außenumgebung des Unterseebootes geschaffen werden. Hierzu wird das Ausstoßrohr durch Öffnen eines Absperrventils geflutet, wobei in möglichst kurzer Zeit ein Druckausgleich zwischen dem Inneren des Ausstoßrohres und dem Umgebungsdruck des Unterseebootes angestrebt wird. Hierbei kann der insbesondere bei großer Tauchtiefe sehr große Druckunterschied zwischen dem Inneren des Ausstoßrohres und der Außenumgebung des Unterseeboots nach dem Öffnen des Absperrventils dazu führen, dass der durch das Absperrventil in das Ausstoßrohr einströmende Wasserstrahl eine derart große Impulswirkung hat, dass er die in dem Ausstoßrohr befindliche Waffe beschädigt oder zerstört.

Vor diesem Hintergrund liegt der Erfindung die Aufgabe zugrunde, ein Ventil zu schaffen, mit dem ein gegenüber seiner Umgebung unter Unterdruck stehender Raum in kurzer Zeit geflutet werden kann, wobei gewährleistet sein soll, dass in dem zu flutenden Raum befindliche Gegenstände nicht durch die Impulswirkung des durch das Ventil strömenden Fluids beschädigt werden.

Diese Aufgabe wird mit einem Stromregelventil mit den in Anspruch 1 angegebenen Merkmalen gelöst, wobei vorteilhafte Weiterbildungen der Erfindung den Unteransprüchen, der nachfolgenden Beschreibung sowie der Zeichnung zu entnehmen sind.

Das erfindungsgemäße Stromregelventil ist zum Fluten eines gegenüber seiner Umgebung unter Unterdruck stehenden Raumes und insbesondere zum Fluten eines Behälters an einem Unterseeboot vorgesehen. Gemäß der Erfindung ist das Stromregelventil mit einer Absperreinrichtung ausgestattet, wobei es Mittel zum Steuern der Absperreinrichtung aufweist.

Grundidee der Erfindung ist es also, ein Ventil zur Verfügung zu stellen, mit dem der Durchflussstrom durch das Ventil regelbar ist und so unabhängig von dem eingangsseitig des Ventils herrschenden Druck im Wesentlichen konstant gehalten werden kann. Hierbei ist der Durchflussstrom durch das Stromregelventil zweckmäßigerweise so einstellbar, dass der zu flutende Raum bzw. Behälter in einer vorgegebenen Zeit geflutet wird, wobei der Durchflussstrom durch das Stromregelventil allerdings derart begrenzt wird, dass der von dem in den Behälter einströmenden Fluid ausgeübte Impuls einen in dem Raum bzw. Behälter befindlichen Gegenstand nicht beschädigen kann.

Das erfindungsgemäße Stromregelventil dient also nicht nur als Druckminderer, sondern auch als Absperrventil, da es neben dem Stromregelventil eine Absperreinrichtung aufweist. Mit dem Absperrventil kann ein zu flutender Raum vor dem Fluten druckdicht gegenüber seiner Umgebung verschlossen werden. Hierbei ermöglichen die Mittel zum Steuern der Absperreinrichtung, einen Schließkörper des Stromregelventils in eine einen Strömungspfad durch das Stromregelventil freigebende und eine diesem Strömungspfad verschließende Stellung zu bewegen.

Vorteilhaft weist das Stromregelventil zumindest einen zu Beginn eines Stromregelvorgangs geschlossenen Strömungsauslass auf. Im Gegensatz zu bislang bekannten Ventilen dieser Art, bei denen der Strömungsauslass zu Beginn einer Volumenstromregelung vollständig geöffnet ist, können so zu Beginn des Stromregelvorgangs an dem Strömungsauslass Volumenstromspitzen vermieden werden, die ansonsten zu einer Beschädigung oder Zerstörung eines Gegenstandes führen könnten, der sich in dem über das Stromregelventil zu flutenden Raum befindet.

Der Schließkörper des Stromregelventils wird vorzugsweise von einem Schieber gebildet. Dieser Schieber kann derart ausgebildet und angeordnet sein, dass er eine an einem Ventilgehäuse des Stromregelventils ausgebildete Einlassöffnung in einer Schieberstellung verschließt und in einer weiteren Schieberstellung freigibt. Bevorzugt ist allerdings eine Ausgestaltung des Schiebers, bei der an dem Schieber die Einlassöffnung des Stromregelventils ausgebildet ist.

Der Schieber ist vorzugsweise als ein Hohlkörper ausgebildet, der einen Teil des Strömungspfads durch das Stromregelventil bildet. Die Einlassöffnung des Stromregelventils kann bei dieser Ausbildung des Schiebers freigegeben werden, indem der Schieber aus dem Ventilgehäuse des Stromregelventils herausgefahren wird. In einer Schließstellung wird die an dem Schieber ausgebildete Einlassöffnung zweckmäßigerweise in einem in dem Ventilgehäuse eingefahrenen Zustand des Schiebers von einem Bereich des Ventilgehäuses verschlossen.

Zur Durchflussregelung weist das erfindungsgemäße Stromregelventil vorteilhaft eine Druckwaage mit einem Hohlkolben auf. Dieser Hohlkolben ist vorzugsweise teleskopierbar und besonders bevorzugt zweiteilig teleskopierbar ausgebildet. Hierbei kann der Hohlkolben zwei ineinander greifende Kolbenteile aufweisen, die in einem begrenzten Bereich relativ zueinander verschiebbar sind. Der Hohlkolben bildet so eine Regeldrossel, mit der der Öffnungsquerschnitt eines an dem Ventilgehäuse ausgebildeten Strömungsauslasses des Stromregelventils in Abhängigkeit von dem eingangsseitig des Strömungsauslasses herrschenden Druck verändert werden kann. Die Änderung des Öffnungsquerschnitts des Strömungsauslasses erfolgt bei dieser Ausgestaltung durch das Ein- bzw. Ausfahren zumindest eines Teils des teleskopierbaren Hohlkolbens und damit einhergehend durch Veränderung der Lage einer von dem Hohlkolben gebildeten Steuerkante relativ zu dem Strömungsauslass des Stromregelventils.

Gemäß einer vorteilhaften Weiterbildung der Erfindung bildet der Hohlkolben einen Teil eines Strömungspfads durch das Stromregelventil. Bevorzugt weist der Hohlkolben hierbei umfangsseitig zumindest eine Strömungseinlassöffnung und zumindest eine Strömungsauslassöffnung auf. Die Strömungsauslassöffnung des Hohlkolbens kann korrespondierend zur Lage eines an dem Ventilgehäuse ausgebildeten Strömungsauslasses des Stromregelventils angeordnet sein und durch Ein- und Ausfahren des Hohlkolbens in eine den freien Öffnungsquerschnitt des Strömungsauslasses ändernde Stellung bewegbar sein, wobei der Strömungsquerschnitt des Strömungsauslasses in einer Stellung des Hohlkolbens vollständig verschließbar ist und in einer anderen Stellung des Hohlkolbens vollständig freigegeben ist.

Besonders vorteilhaft bildet der Schieber einen Teil der Druckwaage des erfindungsgemäßen Stromregelventils. Dementsprechend bildet die Druckwaage nicht nur eine Regeleinrichtung zum Regeln des Durchflussstroms durch das Ventil, sondern dient vorteilhaft gleichzeitig auch als Absperreinrichtung, mit der das Stromregelventil verschlossen und geöffnet werden kann. Hierzu ist die Druckwaage mittels geeigneter Steuerungsmittel in dem Ventilgehäuse derart bewegbar, dass der Schieber in eine den Strömungseinlass des Stromregelventils freigebende und eine den Strömungseinlass des Stromregelventils verschließende Stellung bewegt werden kann.

Weist die Druckwaage einen Hohlkolben auf, ist der Schieber zweckmäßigerweise hohlzylindrisch ausgebildet und bildet einen Teil des Hohlkolbens. Bevorzugt bildet der Schieber hierbei eine der beiden ineinander greifenden Kolbenteile, an deren Umfangsseite zumindest eine Strömungseinlassöffnung des Hohlkolbens angeordnet ist. Diese Strömungseinlassöffnung kann auch den Strömungseinlass des gesamten Stromregelventils bilden, der durch Herausbewegen des Hohlkolbens aus dem Ventilgehäuse geöffnet und durch Zurückbewegen in das Ventilgehäuse wieder verschlossen werden kann.

Bevorzugt ist in dem Hohlkolben der Druckwaage eine vorgespannte Druckfeder angeordnet. Diese stützt sich zweckmäßigerweise an den beiden zueinander gerichteten Stirnseiten des Hohlkolbens ab. Die Druckfeder bildet bei dieser Ausgestaltung zusammen mit dem Hohlkolben die Druckwaage und dient zum Teleskopieren bzw. Auseinanderbewegen der beiden ineinander greifenden Kolbenhälften des Hohlkolbens.

Um den Hohlkolben in dem Ventilgehäuse in eine die Strömungseinlassöffnung des Hohlkolbens freigebende Stellung bewegen zu können, ist der Hohlkolben bevorzugt fluidisch betätigt verschiebbar. Der Hohlkolben kann bei dieser Ausgestaltung pneumatisch, vorzugsweise allerdings hydraulisch betätigt in Richtung seiner Längsachse in dem Ventilgehäuse bewegt werden.

Zum Verschieben des Hohlkolbens ist vorteilhaft eine Kolben-Zylinder-Anordnung vorgesehen, wobei der Zylinder vorzugsweise Teil des Hohlkolbens bildet. Der Kolben der Kolben-Zylinder-Anordnung ist bei dieser Weiterbildung des erfindungsgemäßen Stromregelventils feststehend in dem Ventilgehäuse angeordnet, während der Zylinder zusammen mit dem Hohlkolben in dem Ventilgehäuse durch Druckbeaufschlagung einer Kammer des Zylinders mit einem Druckmedium, vorzugsweise mit einer Hydraulikflüssigkeit, bewegbar ist.

In einer anderen vorteilhaften Ausgestaltung ist der Hohlkolben in dem Ventilgehäuse mechanisch betätigt verschiebbar. Hierbei kann das Bewegen des Hohlkolbens beispielsweise über eine Hebelanordnung oder über einen Spindeltrieb erfolgen.

Um das Verschieben des Hohlkolbens zu erleichtern, weist das Stromregelventil zweckmäßigerweise eine abschließbare Bypassleitung auf, über die das Innere des Hohlkolbens mit der Umgebung des zu flutenden Raumes strömungsverbindbar ist. Dies ist besonderes dann vorteilhaft, wenn der Hohlkolben an einer Außenseite von dem Eingangsdruck des Absperrventils beaufschlagt wird und entgegen diesem Eingangsdruck aus dem Ventilgehäuse herausbewegt werden soll. In diesem Fall kann durch Öffnen der Bypassleitung ein Druckausgleich zwischen dem auf den Hohlkolben wirkenden Eingangsdruck und dem Innendruck in dem Stromregelventil geschaffen werden.

Um eine Beschädigung oder Zerstörung von Gegenständen in dem Raum, der mittels des erfindungsgemäßen Stromregelventils geflutet werden soll, besonders sicher ausschließen zu können, ist vorteilhaft abströmseitig der Strömungsauslassöffnung der Druckwaage eine Prallplatte angeordnet. Diese Prallplatte ist dazu vorgesehen, den aus der Strömungsauslassöffnung der Druckwaage austretenden Flüssigkeitsstrahl aufzufangen, so dass er keinen in dem zu flutenden Raum angeordneten Gegenstand direkt treffen kann.

Eine weitere bevorzugte Ausgestaltung des erfindungsgemäßen Stromregelventils sieht eine Verriegelungseinrichtung vor, die den Hohlkolben in einer das Stromregelventil schließenden Stellung hält. Hierbei ist ein Riegel vorgesehen, der ein aus dem Ventilgehäuse mittels einer Druckfeder herausbewegbares Kolbenteil des Hohlkolbens in einer Schließstellung des Stromregelventils gegen die Federkraft der Druckfeder formschlüssig festhält.

Nachfolgend ist die Erfindung anhand eines in der Zeichnung dargestellten Ausführungsbeispiels näher erläutert. Darin zeigen:
- Fig. 1: in einem schematischen Längsschnitt ein Stromregelventil gemäß der Erfindung in einer ersten Arbeitsstellung,
- Fig. 2: das Stromregelventil nach Fig. 1 in einer zweiten Arbeitsstellung,
- Fig. 3: das Stromregelventil nach Fig. 1 in einer dritten Arbeitsstellung und
- Fig. 4: das Stromregelventil nach Fig. 1 in einer vierten Arbeitsstellung.

Das erfindungsgemäße Stromregelventil weist ein hohlzylindrisches Ventilgehäuse 2 mit einer offenen und einer geschlossenen Seite auf. Das Ventilgehäuse 2 greift über eine Öffnung einer Außenwand 4 in einen Raum ein, der mittels des Stromregelventils druckdicht verschlossen und nachfolgend geflutet werden soll. Hierbei stützt sich das Ventilgehäuse 2 über einen an seinem offenen Ende umfänglich nach außen erstreckende Kragen 6 an der Außenseite der Außenwand 4 ab, über den es mit der Außenwand 4 fest verbunden ist.

In dem Ventilgehäuse 2 ist ein Hohlkolben 8 angeordnet, der in Richtung einer Längsachse A des Ventilgehäuses 2 verschiebbar ist. Der Hohlkolben 8 ist zweiteilig ausgebildet, wobei ein hohlzylindrisches Hohlkolbenteil 8a in ein ebenfalls hohlzylindrisches Hohlkoben 8b eingreift. Hierdurch sind die Hohlkolbenteile 8a und 8b in Richtung einer Längsachse A des Hohlkolbens 8 relativ zueinander bewegbar, wobei der mögliche Bewegungsbereich der beiden Hohlkolbenteile 8a und 8b durch einen an dem offenen Ende des Hohlkolbenteils 8a nach außen gerichteten Kragen 10 und einen an dem offenen Ende des Hohlkolbenteils 8b nach innen gerichteten Kragen 12 begrenzt wird.

In dem Hohlkolbenteil 8b ist ein Hohlzylinder 14 angeordnet, in den ein Kolben 16 eingreift. Dieser Kolben 16 ist an dem geschlossen ausgebildeten Ende des Ventilgehäuses 2 befestigt. Das in den Hohlzylinder 14 eingreifende Ende des Kolbens 16 ist radial erweitert ausgebildet, wobei der Außenquerschnitt dieses erweiterten Bereichs des Kolbens 16 mit dem Innenquerschnitt des Hohlzylinders 14 korrespondiert. Der radial erweiterte Bereich des Kolbens 16 teilt den Hohlzylinder 14 in eine an dem freien Ende des Kolbens 16 angrenzende erste Hohlzylinderkammer 14a und eine den Kolben 16 umfänglich umgebende zweite Hohlzylinderkammer 14b.

Der Hohlzylinder 14 bildet zusammen mit dem Kolben 16 eine Kolben-Zylinder-Anordnung, mit der der Hohlkolben 8 in dem Ventilgehäuse 2 hydraulisch bewegbar ist, wobei der Hohlkolben 8 teilweise aus dem Ventilgehäuse 2 herausbewegt werden kann. Die Bedruckung des Hohlzylinders 14 mit einer Hydraulikflüssigkeit erfolgt über durch den Kolben 16 geführte Leitungen 18 und 20, die außerhalb des Ventilgehäuses 2 an einem 4/3-Wegeventil 22 angeschlossen sind. Die Leitung 18 mündet in der ersten Hohlzylinderkammer 14a, während die Leitung 20 in der zweiten Hohlzylinderkammer 14b mündet. Je nach Stellung des 4/3-Wegeventil 22 kann so entweder die Hohlzylinderkammer 14a oder die Hohlzylinderkammer 14b bedruckt werden.

In seinem in das Ventilgehäuse 2 eingefahrenen Zustand ist der Hohlkolben 8 nahezu vollständig in dem Ventilgehäuse 2 angeordnet, wobei allerdings dass geschlossene Ende 24 des Hohlkolbenteils 8a. gegenüber dem Innenquerschnitt des Ventilgehäuses 2 radial erweitert ist und eine umfängliche Anlageschulter bildet, die im eingefahrenen Zustand an der Außenseite des Kragens 6 des Ventilgehäuses 2 aufliegt. Über einen in direkter Nähe zu dem Ende 24 in einer umfänglichen Nut angeordneten Dichtring 26 wird der Hohlkolben 8 gegenüber der Innenwandung des Ventilgehäuses 2 abgedichtet.

Zum Ausfahren des Hohlkolbens 8 aus dem Ventilgehäuse 2 wird das 4/3-Wegeventil derart gestellt, dass eine Hydraulikflüssigkeit über die Leitung 18 in die Hohlzylinderkammer 14a strömen kann. In umgekehrter Weise kann der Hohlkolben 8 in das Ventilgehäuse 2 eingefahren werden, indem das 4/3-Wegeventil so gestellt wird, dass die Hydraulikflüssigkeit über die Leitung 20 in die Hohlzylinderkammer 14b einströmen kann.

In der Nähe seines Endes 24 weist das Hohlkolbenteil 8a über seinen Umfang verteilt Strömungseinlassöffnungen 28 auf. Diese sind an dem Hohlkolbenteil 8a derart angeordnet, dass sie sich im ausgefahrenen Zustand des Hohlkolbens 8 außerhalb des Ventilgehäuses 2 befinden, im eingefahrenen Zustand des Hohlkolbens 8 allerdings von der Innenwandung des Ventilgehäuses 2 verschlossen werden. Bei aus dem Ventilgehäuse 2 ausgefahrenem Zustand des Hohlkolbens 8 kann ein Fluid aus der Außenumgebung des erfindungsgemäßen Stromregelventils in das Innere des Hohlkolbens 8 einströmen. Insofern bildet das Hohlkolbenteil 8a einen als Schieber ausgebildeten Schließkörper des Stromregelventils. Zugleich bilden die Strömungseinlassöffnungen (28) Drosseln, die eine dem in das Innere des Hohlkolbens 8 einströmenden Volumenstrom proportionale Druckdifferenz zwischen der äußeren Umgebung des Stromregelventils und dem Innenraum des Hohlkolbens 8 erzeugen.

Um das über die Strömungseinlassöffnungen 28 in das Innere des Hohlkolbens 8 eingeströmte Fluid von dort zu Strömungsauslässen 30 des Stromregelventils, die an dem Ventilgehäuse 2 umfänglich verteilt angeordnet sind, weiterleiten zu können, weist das Hohlkolbenteil 8a über seinen Umfang verteilt Strömungsauslassöffnungen 32 auf. Da der Hohlkolben 8 aber einen Teil einer Druckwaage bildet, sind dessen Strömungsauslassöffnungen 32 nicht immer strömungsleitend mit den an dem Ventilgehäuse 2 ausgebildeten Strömungsauslässen 30 verbunden. Eine solche Leitungsverbindung wird durch das Teleskopieren des Hohlkolbenteils 8a mittels einer in dem Inneren des Hohlkolbens 8 angeordneten Druckfeder 34 ermöglicht, die zusammen mit dem Hohlkolben 8 die Druckwaage bildet. Die als Schraubenfeder ausgebildete Druckfeder 34 stützt sich in dem Hohlkolben 8 einerseits an der inneren Stirnseite des Hohlkolbenteils 8b sowie andererseits an einer an der Innenseite des Endes 24 des Hohlkolbenteils 8a angeordneten Einstellscheibe 36 ab. Die Lage der Einstellscheibe 36 ist in Richtung der Längsachse A über eine Stellschraube 38 einstellbar, wodurch die Vorspannung der Druckfeder 34 änderbar ist.

Das Hohlkolbenteil 8a mit den daran ausgebildeten Strömungsauslassöffnungen 32 bildet zusammen mit dem Ventilgehäuse 2 eine Regeldrossel, mit der der Öffnungsquerschnitt der an dem Ventilgehäuse 2 ausgebildeten Strömungsauslässe 30 des Stromregelventils in Abhängigkeit der Stellung des Hohlkolbens 8 verändert werden kann. Die Stellung des oberen Hohlkolbenteils 8a stellt sich aufgrund des Kräftegleichgewichts am Hohlkolben 8 ein, wobei sich das Kräftegleichgewicht aus der Druckdifferenz zwischen dem Druck im Hohlkolben 8 und des auf dem geschlossenen Ende 24 des Hohlkolbenteils 8a lastenden Außendrucks und der mit der Stellung des Hohlkolbens 8 abhängigen Federkraft der Druckfeder 34 ergibt.

Nachfolgend ist die Funktionsweise des erfindungsgemäßen Stromregelventils beschrieben.

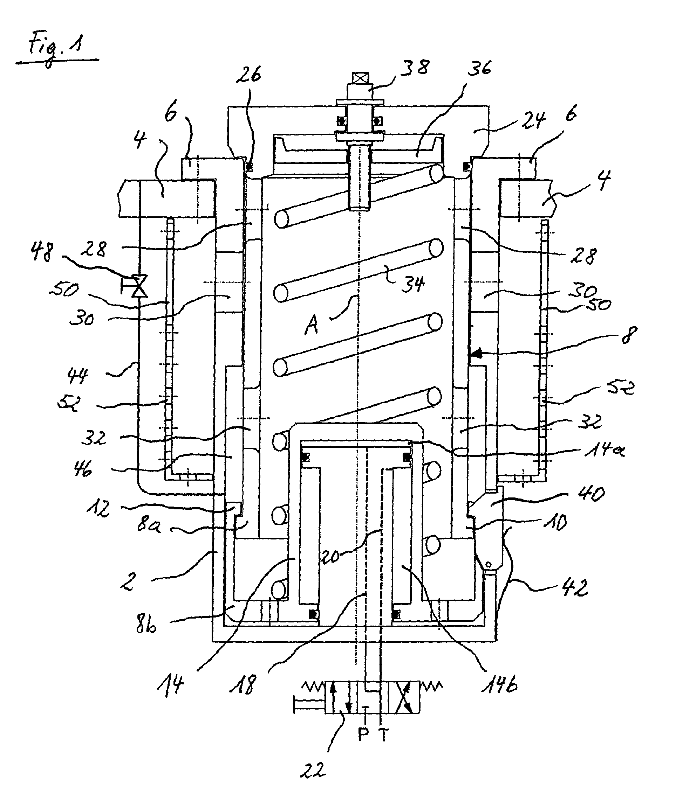

Fig. 1 zeigt das Stromregelventil mit vollständig in dem Ventilgehäuse 2 eingefahrenen Hohlkolben 8. In dieser Stellung wird ein gegenüber der Außenumgebung unter Unterdruck stehender Raum druckdicht von dem Stromregelventil verschlossen. Der in der Außenumgebung des Stromregelventils herrschende Druck drückt auf die Außenseite des Endes 24 des Hohlkolbenteils 8a. Übersteigt die so auf das Hohlkolbenteil 8a ausgeübte Druckkraft die hierzu in entgegengesetzter Richtung wirkende Federkraft der Druckfeder 24, so kann der Hohlkolben 8 allein durch den Außendruck in einer das Stromregelventil verschließenden Stellung gehalten werden. Dies ist allerdings nicht der Fall, wenn die Federkraft der Druckfeder 34 die von außen auf das Hohlkolbenteil 8a wirkende Druckkraft übersteigt. Um zu verhindern, dass die Druckfeder 34 das Hohlkolbenteil 8a unbeabsichtigt in eine das Stromregelventil öffnende Stellung bewegt, ist eine Verriegelung mit einem Riegel 40 vorgesehen, die das Hohlkolbenteil 8a in einer das Stromregelventil verschließenden Stellung hält. Der Riegel 40 ist hakenförmig ausgebildet und hintergreift den Kragen 10 des Hohlkolbenteils 8a, wobei er von einer Blattfeder 42 in dieser Stellung gehalten wird.

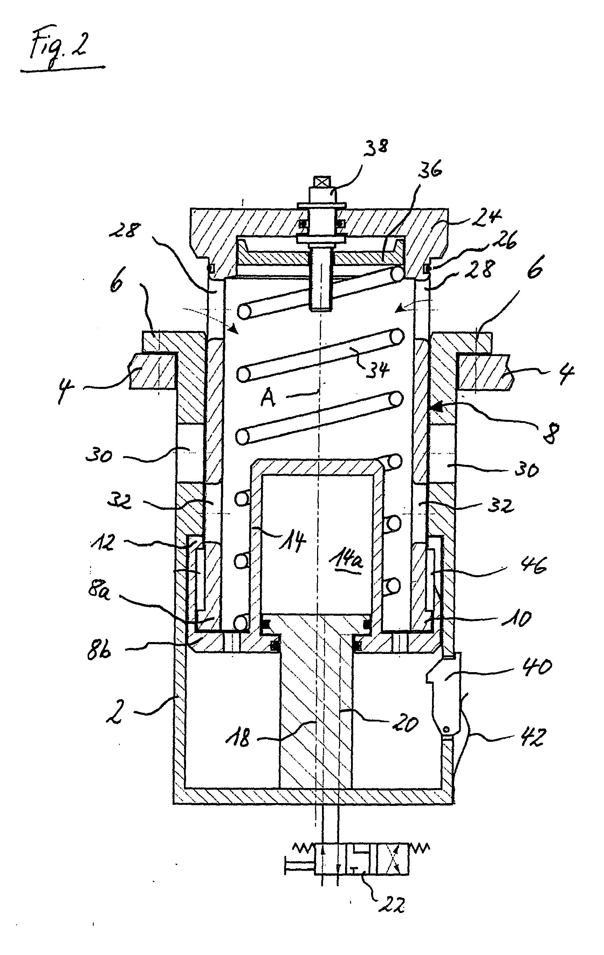

Soll der mit dem Stromregelventil verschlossene Raum geflutet werden, wird das 4/3- Wegeventil derart gestellt, dass Hydraulikflüssigkeit über die Leitung 18 in die Hohlzylinderkammer 14a strömen kann (Fig.2). Hierdurch wird das Hohlkolbenteil 8b zusammen mit dem Hohlkolbenteil 8a in einer von der geschlossenen Stirnseite des Ventilgehäuses 2 abgewandten Richtung bewegt, wobei das Hohlkolbenteil 8b den Riegel 40 gegen die Kraft der Blattfeder 42 in eine das Hohlkolbenteil 8a freigebende Stellung bewegt.

Für den Fall, dass ein hydraulisches Verfahren des Hohlkolbens 8 nicht möglich ist, ist eine Bypassleitung 44 vorgesehen, über die das Innere des Ventilgehäuses 2 mit der Außenumgebung des zu flutenden Raumes leitungsverbindbar ist. (Fig. 1). Die Bypassleitung 44 mündet in dem Ventilgehäuse 2 in einer Ringkammer 46, die bei eingefahrenem Hohlkolben 8 direkt an die Strömungsauslassöffnungen 32 des Hohlkolbenteils 8a angrenzend angeordnet ist. Zum Herausfahren des Hohlkolbens 8 aus dem Ventilgehäuse 2 wird zunächst ein in der Bypassleitung 44 angeordnetes Absperrventil 48 geöffnet. Hierdurch kann ein Fluid aus der Außenumgebung des zu flutenden Raumes in die Ringkammer 46 des Ventilgehäuses und von dort durch die Strömungsauslassöffnung 32 in den Hohlkolben 8 strömen. Hierdurch wird ein Druckausgleich zwischen dem auf dem Ende des Hohlkolbenteils 8a lastenden Außendruck und dem Innendruck in dem Hohlkolben 8a geschaffen, wodurch der Hohlkolben 8 schließlich aus dem Ventilgehäuse 2 herausgefahren werden kann.

Beim Herausfahren des Hohlkolbens 8 aus dem Ventilgehäuse 2 drückt der auf das Ende 24 des Hohlkolbenteils 8a wirkende Außendruck das Hohlkolbenteil 8a in seine gegenüber dem Hohlkolbenteil 8b eingefahrene, d.h. nicht teleskopierte Stellung. In dieser Stellung kann ein Fluid aus der Außenumgebung des zu flutenden Raumes über die Strömungseinlassöffnungen 28 in das Innere des Hohlkolbens einfließen, wobei die Strömungsauslassöffnungen 32 des Hohlkolbens 8 allerdings von der Innenwandung des Ventilgehäuses 2 verschlossen werden (Fig. 2).

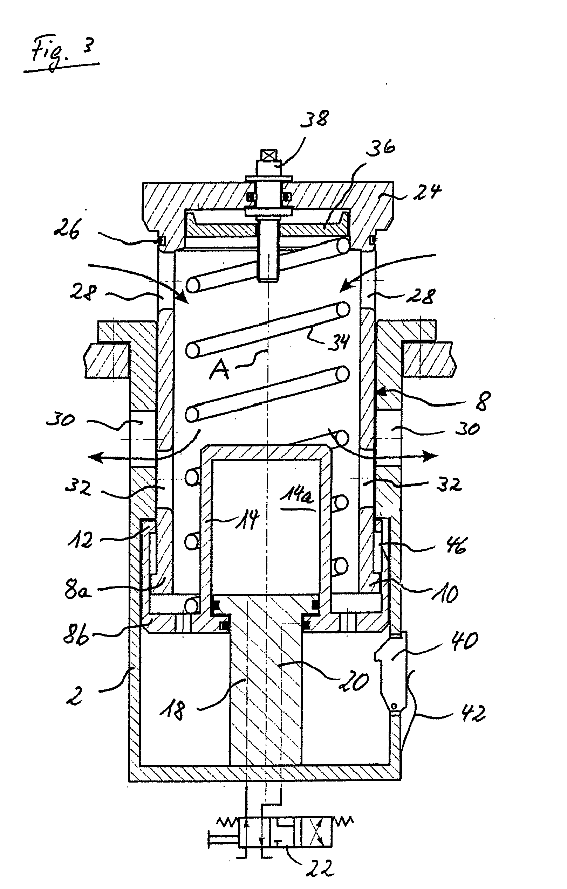

Das Einströmen des Fluids über die Strömungseinlassöffnungen 28 in den Hohlkolben 8a führt nun zu einer Verringerung der Druckdifferenz zwischen der Außenumgebung und dem Innenraum des Hohlkolbens 8, wobei es aufgrund der in dem Hohlkolben 8 drückend angeordneten Druckfeder 34 schließlich dazu kommt, dass der Innendruck des Hohlkolbens 8 zusammen mit der Federkraft der Druckfeder 34 den darauf lastenden Außendruck übersteigt (Fig. 3). Dies hat zur Folge, dass das Hohlkolbenteil 8a aus dem Hohlkolbenteil 8b herausgefahren wird, und ein Teilbereich der Strömungsauslassöffnungen 32 des Hohlkolbens 8 die an dem Ventilgehäuse 2 vorgesehenen Strömungsauslässe 30 überlappen. Dies ermöglicht, dass ein zunächst stark gedrosselter Fluidstrom von dem Inneren des Hohlkolbens 8 in den zu flutenden Raum strömen kann.

Nimmt der Fluidstrom ab, verringert sich auch der Druckabfall an den Einlassöffnungen 28, der Druck im Hohlkolben 8 steigt und aufgrund des sich neu einstellenden Kräftegleichgewichts an der Druckwaage wird das Hohlkolbenteil 8a ein kleines Stück herausgefahren, wodurch sich die Strömungsauslässe 32 und 30 geringfügig mehr überlappen und der Fluidstrom wieder anwächst. Die Anordnung wird sich dadurch immer auf einen konstanten Fluidstrom einpendeln, solange die Druckdifferenz zwischen Außen- und Innendruck ausreichend groß ist.

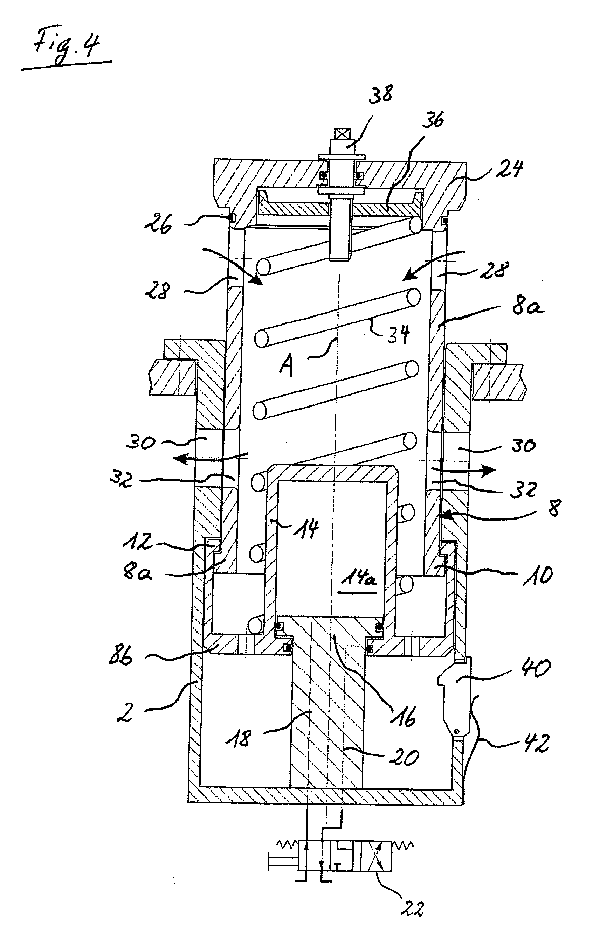

Schließlich wird zum Ende des Flutvorganges bei einer kleinen Druckdifferenz zwischen Außen- und Innendruck des Hohlkolbens 8 das Hohlkolbenteil 8a derart aus dem Hohlkolbenteil 8b herausgefahren, dass die Strömungsauslassöffnungen 32 des Hohlkolbenteils 8a korrespondierend zu den Strömungsauslässen 30 des Ventilgehäuses 2 angeordnet sind, wobei das Fluid aus dem Innenraum des Hohlkolbens 8 über den gesamten Querschnitt der Auslassöffnungen 32 des Hohlkolbenteils 8a durch den Auslass 30 des Ventilkörpers abfließen kann (Fig. 4).

Um zu verhindern, dass ein aus den Auslässen 30 ausströmender Fluidstrom direkt auf einen in dem zu flutenden Raum befindlichen Gegenstand trifft, sind außenseitig der Strömungsauslässe 30 Prallplatten 50 vorgesehen, die den aus einem Strömungsauslass 30 ausströmenden Fluidstrom zunächst auffangen, und anschließend über an der Prallplatte 50 ausgebildete Austrittsöffnungen 42 in den zu flutenden Raum leiten (Fig.1).

### Bezugszeichenliste

- 2 -: Ventilgehäuse
- 4 -: Außenwand
- 6 -: Kragen
- 8 -: Hohlkolben
- 8a -: Hohlkolbenteil
- 8b -: Hohlkolbenteil
- 10 -: Kragen
- 12 -: Kragen
- 14 -: Hohlzylinder
- 14a -: Hohlzylinderkammer
- 14b -: Hohlzylinderkammer
- 16 -: Kolben
- 18 -: Leitung
- 20 -: Leitung
- 22 -: 4/3-Wegeventil
- 24 -: Ende
- 26 -: Dichtring
- 28 -: Strömungseinlassöffnung
- 30 -: Strömungsauslass
- 32 -: Strömungsauslassöffnung
- 34 -: Druckfeder
- 36 -: Einstellscheibe
- 38 -: Stellschraube
- 40 -: Riegel
- 42 -: Blattfeder
- 44 -: Bypassleitung
- 46 -: Ringkammer
- 48 -: Absperrventil
- 50 -: Prallplatten
- 52 -: Austrittsöffnungen
- A -: Längsachse

## Patentansprüche

1. Stromregelventil zum Fluten eines gegenüber seiner Umgebung unter Unterdruck stehenden Raumes, insbesondere eines Behälters an einem Unterseeboot, **dadurch gekennzeichnet, dass** das Stromregelventil mit einer Absperreinrichtung ausgestattet ist und Mittel zum Steuern der Absperreinrichtung aufweist.

2. Stromregelventil nach Anspruch 1, **dadurch gekennzeichnet, dass** das Stromregelventil zumindest einen zu Beginn eines Stromregelvorgangs geschlossenen Strömungsauslass aufweist.

3. Stromregelventil nach einem der vorangehenden Ansprüche, **dadurch gekennzeichnet, dass** das Stromregelventil einen Schieber (8a) aufweist, welcher einen Schließkörper des Stromregelventils bildet.

4. Stromregelventil nach einem der vorangehenden Ansprüchen, **dadurch gekennzeichnet, dass** das Stromregelventil eine Druckwaage mit einem teleskopierbaren und vorzugsweise zweiteilig teleskopierbaren Hohlkolben (8) aufweist.

5. Stromregelventil nach Anspruch 4, **dadurch gekennzeichnet, dass** der Hohlkolben (8) einen Teil eines Strömungspfads durch das Ventil bildet und bevorzugt umfangsseitig zumindest eine Strömungseinlass- (28)und zumindest eine Strömungsauslassöffnung (32) aufweist.

6. Stromregelventil nach einem der Ansprüche 4 oder 5, **dadurch gekennzeichnet, dass** der Schieber (8a) einen Teil der Druckwaage bildet.

7. Stromregelventil nach Anspruch 6, **dadurch gekennzeichnet, dass** der Schieber (8a) hohlzylindrisch ausgebildet ist und einen Teil des Hohlkolbens (8) bildet.

8. Stromregelventil nach einem der Ansprüche 4 bis 7, **dadurch gekennzeichnet, dass** in dem Hohlkolben (8) eine vorgespannte Druckfeder (34) angeordnet ist.

9. Stromregelventil nach einem der Ansprüche 4 bis 8, **dadurch gekennzeichnet, dass** der Hohlkolben (8) fluidisch betätigt verschiebbar ist.

10. Stromregelventil nach Anspruch 9, **dadurch gekennzeichnet, dass** zum Verschieben des Hohlkolbens (8) eine Kolben-Zylinder-Anordnung vorgesehen ist, wobei der Zylinder (14) vorzugsweise Teil des Hohlkolbens (8) bildet.

11. Stromregelventil nach einem der Ansprüche 4 bis 8, **dadurch gekennzeichnet, dass** der Hohlkolben (8) mechanisch betätigt verschiebbar ist.

12. Stromregelventil nach einem der Ansprüche 43 bis 11, **dadurch gekennzeichnet, dass** das Stromregelventil eine abschließbare Bypassleitung (44) aufweist, über welche das Innere des Hohlkolbens (8) mit der Umgebung des zu flutenden Raumes strömungsverbindbar ist.

13. Stromregelventil nach einem der Ansprüche 4 bis 12, **dadurch gekennzeichnet, dass** abströmseitig der Strömungsauslassöffnung (32) der Druckwaage eine Prallplatte (50) angeordnet ist.

14. Stromregelventil nach einem der Ansprüche 4 bis 13, **dadurch gekennzeichnet, dass** das Stromregelventil eine Verriegelungseinrichtung (40) aufweist, die den Hohlkolben (8) in einer das Stromregelventil schließenden Stellung hält.
